# EUROPEAN PATENT APPLICATION

(11) **EP 3 101 750 A1**
(43) Date of publication of application: **07.12.2016**
(21) Application number: 16169685.1
(22) Date of filing: 13.05.2016
(51) Int. Cl.: H02J 4/00, H02J 3/38, H01H 9/54

(54) **HIGH POWER SOLID STATE SWITCHES FOR AIRCRAFT**

(30) Priority: 13.05.2015 US 201514710676
(71) Applicant: Hamilton Sundstrand Corporation, Charlotte, NC 28217-4578 (US)
(72) Inventor: RADULESCU, Gabriel, Loves Park, Illinois 61111 (US); DICKEY, John A., Caledonia, Illinois 61011 (US); MILLER, Christian, Beloit, Wisconsin 53511 (US); WAVERING, Jeffrey T., Rockford, Illinois 61109 (US)
(74) Representative: Hughes, Andrea Michelle

(57) **Abstract**

A high power solid state power controller is provided. The power controller includes a first power bus 112, a second power bus 116, and a high power solid state switch unit 218 electrically connected to the first power bus and the second power bus. The high power solid state switch unit includes a first solid state switch 220 configured to operationally control power supplied between the first power bus and the second power bus and a controller configured to control the solid state switch and configured to control power supplied from the first power bus and the second power bus.

## Description

### BACKGROUND

The subject matter disclosed herein generally relates to power switches for aircraft and, more particularly, to high power solid state switches for aircraft.

In aircraft power distribution systems, electromechanical relays and/or contactors, along with circuit breakers, are used for load, feeder, bus tie, and power source controls. These electromechanical contactors are generally large, heavy, and expensive, and may have a limited contact cycle life due to arcing, wear, and degradation. These types of mechanical power switches and contacts, when employed in aircraft and aerospace AC and DC power distribution systems and applications, may have switch times that impact the devices and systems that use the power supplied therethrough. That is, the contact time or switching time that is inherent in these systems may impact the larger systems of an aircraft that rely upon these switches for power supply.

In order to compensate for the switch times of these mechanical systems, additional hardware may be incorporated into the system to reduce switch time and/or minimize the power loss during switching and operation of contactors. For example, a capacitor may be incorporated into a system to compensate for a power loss during switching of the mechanical switch and maintain a consistent power supply. The mechanical systems and specifically the contacts thereof may be subject to bouncing which may result in poor power quality provided to systems and devices downstream of the contacts. To compensate for the loss in power quality due to bouncing, existing systems may incorporate additional circuitry and loads. The use of additional circuitry and loads to compensate for loss of power quality and/or to compensate for switch times, may increase the total weight of the system, which can lead to inefficiencies in aircraft applications.

An alternative solution may be a solid state power controller ("SSPC") to replace the electromechanical contactors. The SSPC may provide a high reliability, "soft" switching characteristics, fast response time, and an ability to facilitate advanced load management. A typical SSPC mainly comprises a solid state switching device ("SSSD"), which performs the fundamental power on/off switching, and a SSPC processing engine, which is responsible for SSSD on/off control and feeder wire protection. While SSPCs with current rating less than 15A have been widely used in aircraft secondary distribution systems, their applications in aircraft primary distribution systems still face strong technical challenges. Current SSPCs may suffer from power dissipation, voltage drop, and leakage current when subject to high loads or high power ratings. The SSPCs are thus insufficiently powerful enough to provide switching in high power configurations, such as needed for switching between generators in aircraft applications.

### SUMMARY

According to one embodiment a high power solid state power controller is provided. The power controller includes a first power bus, a second power bus, and a high power solid state switch unit electrically connected to the first power bus and the second power bus. The high power solid state switch unit includes a first solid state switch configured to operationally control power supplied between the first power bus and the second power bus and a controller configured to control the solid state switch and configured to control power supplied from the first power bus and the second power bus.

In addition to one or more of the features described above, or as an alternative, further embodiments may include a bus monitoring unit configured to monitor at least one of voltage and current of both the first power bus and the second power bus.

In addition to one or more of the features described above, or as an alternative, further embodiments may include a first power line configured to electrically connect the first power bus to a first power source.

In addition to one or more of the features described above, or as an alternative, further embodiments may include a second solid state switch operationally configured between the first power source and the first power bus.

In addition to one or more of the features described above, or as an alternative, further embodiments may include that the second solid state switch is part of the high power solid state switch unit and the controller is configured to control the second solid state switch.

In addition to one or more of the features described above, or as an alternative, further embodiments may include a mechanical switch operationally configured between the first power source and the first power bus.

In addition to one or more of the features described above, or as an alternative, further embodiments may include that the mechanical switch is a galvanic switch.

In addition to one or more of the features described above, or as an alternative, further embodiments may include that the first power source is a generator of an aircraft.

In addition to one or more of the features described above, or as an alternative, further embodiments may include a second solid state switch operationally configured between the first power bus and a load.

According to another embodiment, a method of controlling high power using a high power solid state power controller is provided. The method includes supplying power from a first power source to a first power bus, supplying power from a second power source to a second power bus, monitoring at least one of a voltage and a current of the supplied power from the first power source and the second power source, controlling the supplied power from the first power source and the second power source with a high power solid state power controller based on the monitored voltage and/or current of the supplied power, and operating a solid state switch to supply power from at least one of the first power bus and the second power bus.

In addition to one or more of the features described above, or as an alternative, further embodiments may include controlling the power supplied from the first power source to the first power bus with a switch.

In addition to one or more of the features described above, or as an alternative, further embodiments may include that the switch is a mechanical switch.

In addition to one or more of the features described above, or as an alternative, further embodiments may include that the switch is a solid state switch, the method further comprising controlling the solid state switch with the high power solid state power controller.

In addition to one or more of the features described above, or as an alternative, further embodiments may include that each of the first power source and the second is a generator of an aircraft.

In addition to one or more of the features described above, or as an alternative, further embodiments may include monitoring for overcurrent from at least one of the first power source and the second power source.

In addition to one or more of the features described above, or as an alternative, further embodiments may include providing protection with the high power solid state power controller in the event of a detected overcurrent.

Technical effects of embodiments of the present disclosure include providing a high power controller employing solid state switches. Further technical effects include providing a power controller system that substantially reduces mechanical switching device time using high power solid state switches.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic illustration of a traditional high power bus switching mechanism;
FIG. 2 is a schematic illustration of a high power bus switching mechanism in accordance with a first embodiment;
FIG. 3 is a schematic illustration of a high power bus switching mechanism in accordance with a second embodiment; and
FIG. 4 is a schematic illustration of a high power bus switching mechanism in accordance with a third embodiment.

### DETAILED DESCRIPTION

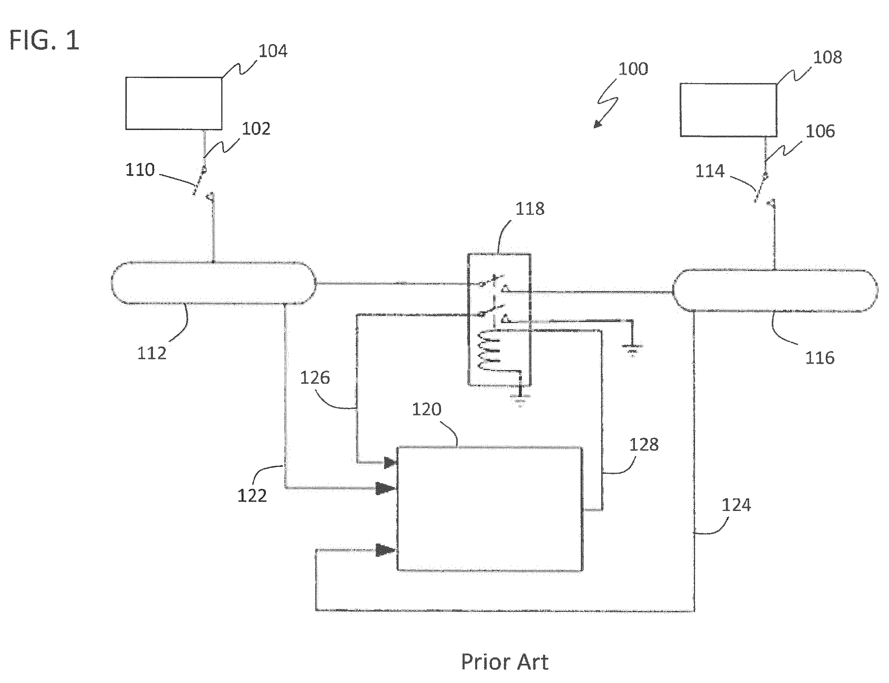

FIG. 1 is a schematic illustration of a traditional high power bus switching mechanism. Bus switching mechanism 100 includes a first power line 102 electrically connecting the bus switching mechanism 100 to a first power source 104 and a second power line 106 electrically connecting the bus switching mechanism to a second power source 108. A first switch 110 is electrically configured along the first power line 102 between the first power source 104 and a first bus 112, and electrically connects the first power source 104 when in a closed state and electrically separates the first power source 104 when in an open state. A second switch 114 is electrically configured along the second power line 106 between the second power source 108 and a second bus 116, and electrically connects the second power source 108 when in a closed state and electrically separates the second power source 108 when in an open state.

Those of skill in the art will appreciate that, in high power applications, the first source 104 and the second source 108 may be generators of aircraft engines, or other types of high power generators or power sources. Accordingly, the first switch 110 and the second switch 114 may be contactors, such as galvanic contactors, configured to provide power control of power supplied from the first power source 104 and the second power source 108, respectively.

The first bus 112 and the second bus 116 are electrically configured, connected, and controlled to supply power to one or more devices (not shown) electrically downstream of the bus switching mechanism 100. Control of the power in the bus switching mechanism 100 is provided by a power switching device 118 and a bus power controller 120. The power switching device 118 may be a contactor and may be subject to bouncing and relatively long switching times. The power switching device 118 is controlled by the bus power controller 120. The bus power controller 120 may include hardware and/or software that are configured to control the power switching device 118 and, thus, the power supplied through the first bus 112 and the second bus 116 to supply power through the bus switching mechanism 100.

The bus power controller 120 may monitor the first bus 112 through a first bus monitor 122. The bus power controller 120 may also monitor the second bus 116 through a second bus monitor 124. The bus power controller 120 is also configured to monitor the power switching device 118 by means of an auxiliary monitor 126. The bus power controller 120 controls the power switching device 118 by means of a bus switch command 128.

As will be appreciated by those of skill in the art, the power switching device 118 may introduce impacts to the power quality due to bouncing or other mechanical impacts. Further, because the power switching device 118 is a mechanical switch there may be periods of time when the power may fluctuate or drop out. For example, when a mechanical power switching device is employed, the process of operating the switch may involve (i) a detection time, (ii) a command time, and (iii) a switching device time. The duration of the combination of these times may be of such length that power quality and consistency is reduced. As noted above, to compensate for these aspects of a mechanical power switching device, additional components may be incorporated into the system to account for the drop out time and/or to account for bouncing or other similar impacts on power consistency and/or quality.

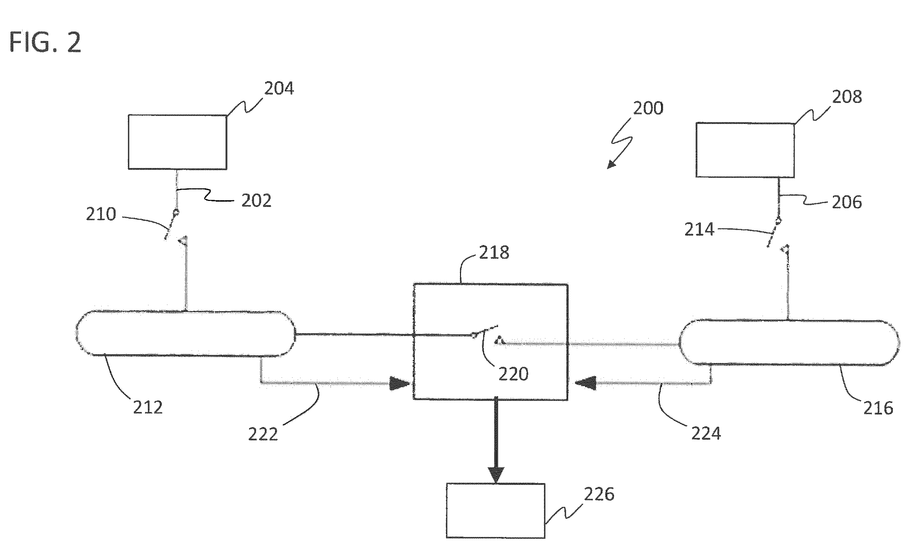

Turning now to FIG. 2, a schematic of a first embodiment of the disclosure is shown. In this embodiment, the bus power controller 120 and the power switching device 118 of FIG. 1 are replaced by a high power solid state switch unit 218. As shown, a bus switching mechanism 200 includes a first power line 202 electrically connecting a first power source 204 to the bus switching mechanism 200 and a second power line 206 electrically connecting a second power source 208 to the bus switching mechanism 200. A first switch 210 is electrically configured along the first power line 202 between the first power source 204 and a first bus 212, and electrically connects the first power source 204 when in a closed state and electrically separates the first power source 204 when in an open state. A second switch 214 is electrically configured along the second power line 206 between the second power source 208 and a second bus 216, and electrically connects the second power source 208 when in a closed state and electrically separates the second power source 208 when in an open state.

A high power solid state switch unit 218 is configured to be electrically connected to both the first bus 212 and the second bus 216 and thus control the power supplied by the first power source 204 and the second power source 208. The high power solid state switch unit 218 may be configured with a solid state switch 220 and a controller or processing unit therein. The solid state switch 220 may operate as an electronic switch that replaces the mechanical switch and separate controller of prior configurations, such as shown in FIG. 1. The high power solid state switch unit 218 may be configured to control the supply of power provided from the first power source 204 and from the second power source 208 by operation of the solid state switch 220.

The high power solid state switch unit 218 may also include a first bus monitor 222 and a second bus monitor 224 configured to enable monitoring of the power in the first bus 212 and the second bus 216, respectively. The monitors 222, 224 may be configured to monitor voltage and/or current of the power in the first or second buses, respectively.

Further, the high power solid state switch unit 218 may include hardware and/or software, such as processing units and/or memory, configured to perform operations and monitoring of power such that a steady, consistent, and high quality power supply is provided from the first power source 204 and the second power source 208. Thus, the high power solid state switch unit 218 may include a controller or control unit configured to provide, in some embodiments, automatic control during loss of power on a bus, and allow for automatic switching and control to supply consistent power. Further, the controller may be configured to provide overcurrent monitoring and/or automatic opening of a unit in the event of overcurrent being detected. Further, in some embodiments, the controller, and thus the high power solid state switch unit 218, may be configured to be remotely controlled and/or report voltage, current, and/or status information to a remote device, either through a wired communication line and/or wirelessly.

In some embodiments, the high power solid state switch unit 218 may be used as a bus tie breaker and direct selected power to powered devices, systems, and/or components electrically downstream of the bus switching mechanism 200, i.e., from the first power source 204 and/or the second power source 208. As shown in FIG. 2, a power converter 226 may be located electrically downstream from the high power solid state switch unit 218 and may be configured to convert the supplied power as required by specific applications.

In the embodiment of FIG. 2, the first switch 210 and the second switch 214 may be configured as mechanical switches, such as galvanic switches. In such embodiments, the first switch 210 and the second switch 214 may be configured as redundant and/or safety switches in the event of power issues related to the first power source 204 or the second power source 208, respectively.

As will be appreciated by those of skill in the art, the high power solid state switch unit 218 of embodiments disclosed herein may provide a faster switching, more consistent power quality, and may not suffer from bouncing as there are no mechanical parts therein.

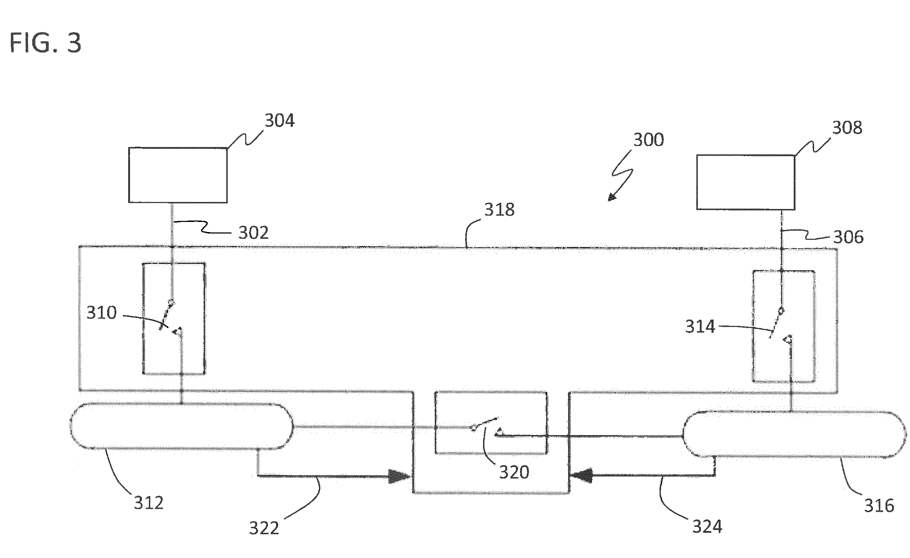

Turning now to FIG. 3, a schematic of a second embodiment of the disclosure is shown. In this embodiment, a different configuration of a high power solid state switch unit 318 is shown. As shown, a bus switching mechanism 300 includes a first power line 302 electrically connecting a first power source 304 to the bus switching mechanism 300 and a second power line 306 electrically connecting a second power source 308 to the bus switching mechanism 300. A first switch 310 is electrically configured along the first power line 302 between the first power source 304 and a first bus 312, and electrically connects the first power source 304 when in a closed state and electrically separates the first power source 304 when in an open state. A second switch 314 is electrically configured along the second power line 306 between the second power source 308 and a second bus 316, and electrically connects the second power source 308 when in a closed state and electrically separates the second power source 308 when in an open state.

The power supplied from the first power source 304 and the second power source 308 may be controlled by a high power solid state switch unit 318. In this embodiment, as shown, the high power solid state switch unit 318 may include a solid state switch 320 located between the first bus 312 and the second bus 316. The high power solid state switch unit 318 may also incorporate the first switch 310 and the second switch 314. That is, in this embodiment, the first switch 310 and the second switch 314 are each configured as solid state switches that are controlled as part of the high power solid state switch unit 318. The high power solid state switch 318 may include processing units, memory, etc. configured to control the electrical power that passes through the bus switching mechanism 300. The voltage of the first bus 312 and the second bus 316 are monitored by the high power solid state switch unit 318 by a first bus monitor 322 and a second bus monitor 324, respectively.

It should be noted that the high power switch unit 318 may also be an aggregate of multiple modules to allow required separation of protection components for meeting system requirements. For example, in some embodiments, each of the switches 310, 314, and 320 may be configured within separate modules or high power solid state switch units. That is, the high power solid state switch unit 318 of FIG. 3 may be configured as three separate switch units, one for each of the switches 310, 314, and 320. This separate or distinct configuration may enable additional safety features, e.g., there may be no possibility of shorting between the various switches/units which may take down or disable both power sources 304, 308 at the same time.

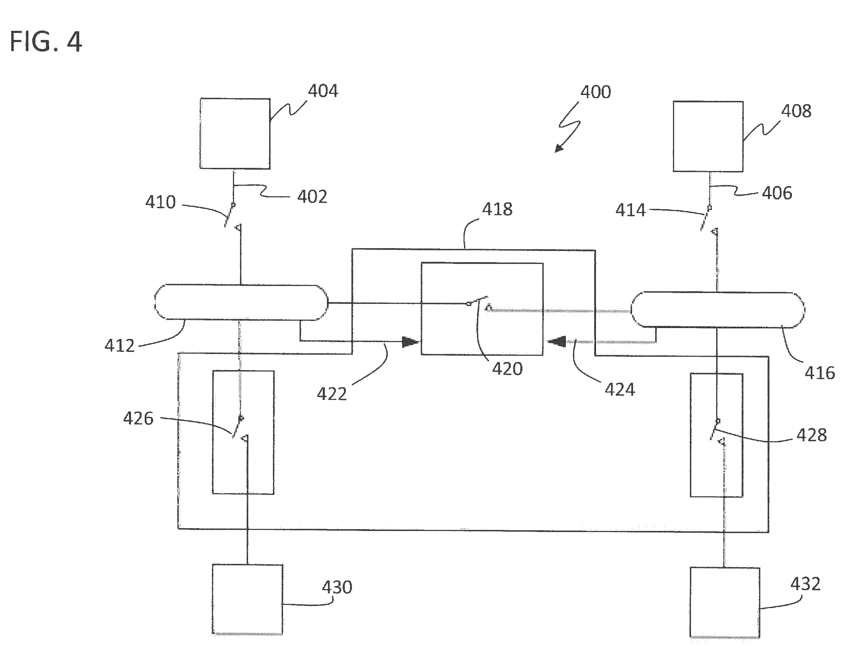

Turning now to FIG. 4, a schematic of a third embodiment of the disclosure is shown. In this embodiment, a different configuration of a high power solid state switch unit 418 is shown. As shown, a bus switching mechanism 400 includes a first power line 402 electrically connecting a first power source 404 to the bus switching mechanism 400 and a second power line 406 electrically connecting a second power source 408 to the bus switching mechanism 400. A first switch 410 is electrically configured along the first power line 402 between the first power source 404 and a first bus 412, and electrically connects the first power source 404 when in a closed state and electrically separates the first power source 404 when in an open state. A second switch 414 is electrically configured along the second power line 406 between the second power source 408 and a second bus 416, and electrically connects the second power source 408 when in a closed state and electrically separates the second power source 408 when in an open state.

The power supplied from the first power source 404 and the second power source 408 may be controlled by a high power solid state switch unit 418. In this embodiment, as shown, the high power solid state switch unit 418 may include a solid state switch 420 located between the first bus 412 and the second bus 416. The high power solid state switch unit 418 may also incorporate a fourth switch 426 and a fifth switch 428. In this embodiment, as shown, the first switch 410 and the second switch 414 may each be configured as mechanical switches, or, alternatively, the first and second switches 410, 414 may be solid state switches as shown in FIG. 3 for example.

The high power solid state switch 418 may include processing units, memory, etc. configured to control the electrical power that passes through the bus switching mechanism 400. The voltage of the first bus 412 and the second bus 416 are monitored by the high power solid state switch unit 418 by a first bus monitor 422 and a second bus monitor 424, respectively.

In this embodiment, as shown in FIG. 4, the first bus 412 is configured to have power from the first bus 412 sent to a first load 430 and the second bus 416 is configured to have power from the second bus 416 sent to a second load 432. That is, the buses 412, 416 are configured to transmit power to individual loads or to groups of loads. In some embodiments, the first and/or second loads 430, 432 may be power distribution units, loads, converters, and/or other types of electrical components as required by particular needs and/or systems. For example, the configuration shown in FIG. 4 may be set up for a high current feed sent to a traditional circuit breaker sub panel that may be configured as the first or second load 430, 432.

It should be noted that the high power switch unit 418 of FIG. 4 may also be an aggregate of multiple modules to allow required separation of protection components for meeting system requirements. For example, in some embodiments, each of the switches 420, 426, and 428 may be configured within separate modules or high power solid state switch units. That is, the high power solid state switch unit 418 of FIG. 4 may be configured as three separate switch units, one for each of the switches 420, 426, and 428. This separate or distinct configuration may enable additional safety features, e.g., there may be no possibility of shorting between the various switches/units which may take down or disable both power sources 404, 408 at the same time.

Advantageously, embodiments described herein provide an efficient power switching configuration for high power applications. Various embodiments provide a switching time on the order of microseconds, which is reduced from millisecond switching times of prior mechanical configurations. Further, various embodiments provide more consistent and high quality power because bouncing or mechanical stresses, situations, failures, etc. may be reduced or eliminated from the power control system. As such, embodiments described herein provide improved power bus switch timing and reduced hold up timing on downstream systems and/or devices using the power.

Moreover, advantageously, embodiments described herein eliminate the mechanical inconvenience of main contact bouncing and eliminates the need for auxiliary contact status monitoring. Further, advantageously, by incorporating a high power solid state switch unit as described herein, the overall weight, size, amount of wiring, and cost of the bus switching mechanism for high power applications may be reduced. Advantageously, in aerospace and aircraft applications, a reduction in weight may provide advantages to efficiency. For example, by employing high power solid state switch units as described above in high power applications, various transformers, capacitors, sensors, etc. may be eliminated from the system, along with the elimination of relatively bulky mechanical switches.

Further, advantageously, high power solid state switch units as described herein may provide differential protection to the system as a built-in and/or inherent feature of the solid state switches. Moreover, high power solid state switch units as described herein may provide current sense capability in addition to voltage/current monitoring. Furthermore, high power solid state switch units described and arranged herein may provide fault detection for downstream power supply, thus providing additional and/or redundant power monitoring, control, and safety features.

Furthermore, advantageously, high power solid state switch units as described herein may enable soft starts or smooth electrical starts of the system when transitioning from an off-state to an on-state. For example, rather than providing an abrupt on-state by activating a physical switch, the high power solid state switch unit may enable rounding of the corner of the on-state, thus providing improved power quality at the time of powering on the system.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the spirit and scope of the present disclosure. Additionally, while various embodiments of the present disclosure have been described, it is to be understood that aspects of the present disclosure may include only some of the described embodiments.

For example, although described herein with respect to three configurations, those of skill in the art will appreciate that the configuration and use of the high power solid state switch units may be varied without departing from the scope of the disclosure. For example, additional high power solid state switch units may be employed throughout the power distribution system, without departing from the scope of the disclosure. Further, although shown and described with two power sources and two power buses, those of skill in the art will appreciate that other numbers of power sources and/or power buses may be employed without departing from the scope of the invention.

Accordingly, the present disclosure is not to be seen as limited by the foregoing description, but is only limited by the scope of the appended claims.

## Claims

1. A high power solid state power controller, the power controller comprising:
a first power bus (112);
a second power bus (116); and
a high power solid state switch unit (218) electrically connected to the first power bus and the second power bus, the high power solid state switch unit comprising:
a first solid state switch (220) configured to operationally control power supplied between the first power bus and the second power bus; and
a controller configured to control the solid state switch and configured to control power supplied from the first power bus and the second power bus.

2. The power controller of claim 1, further comprising a bus monitoring unit (322, 324) configured to monitor at least one of voltage and current of both the first power bus and the second power bus.

3. The power controller of any of the preceding claims, further comprising a first power line (102) configured to electrically connect the first power bus to a first power source.

4. The power controller of claim 3, further comprising a second solid state switch (320) operationally configured between the first power source and the first power bus.

5. The power controller of claim 4, wherein the second solid state switch is part of the high power solid state switch unit and the controller is configured to control the second solid state switch.

6. The power controller of claim 3, further comprising a mechanical switch operationally configured between the first power source and the first power bus.

7. The power controller of claim 6, wherein the first power source is a generator of an aircraft.

8. The power controller of any of the preceding claims, further comprising a second solid state switch operationally configured between the first power bus and a load.

9. A method of controlling high power using a high power solid state power controller, the method comprising:
supplying power from a first power source to a first power bus;
supplying power from a second power source to a second power bus;
monitoring at least one of a voltage and a current of the supplied power from the first power source and the second power source;
controlling the supplied power from the first power source and the second power source with a high power solid state power controller based on the monitored voltage and/or current of the supplied power; and
operating a solid state switch to supply power from at least one of the first power bus and the second power bus.

10. The method of claim 9, further comprising controlling the power supplied from the first power source to the first power bus with a switch.

11. The method of claim 10, wherein the switch is a mechanical switch.

12. The method of claim 10, wherein the switch is a solid state switch, the method further comprising controlling the solid state switch with the high power solid state power controller.

13. The method of any of claims 9-12, wherein each of the first power source and the second is a generator of an aircraft.

14. The method of any of claims 9-12, further comprising monitoring for overcurrent from at least one of the first power source and the second power source.

15. The method of claim 14, further comprising providing protection with the high power solid state power controller in the event of a detected overcurrent.
